# EUROPEAN PATENT SPECIFICATION

(11) **EP 1 945 597 B1**
(45) Date of publication and mention of the grant of the patent: **09.03.2011**
(21) Application number: 00980302.4
(22) Date of filing: 10.11.2000
(51) Int. Cl.: C06B 21/00

(54) **GAS GENERATION SYSTEM**
GASERZEUGENDE ZUSAMMENSETZUNG
SYSTEME DE GENERATION DE GAZ

(30) Priority: 12.11.1999 US 165269 P
(43) Date of publication of application: 23.07.2008
(73) Proprietor: Zodiac Automotive US, Inc., Tempe, Arizona 85283 (US)
(72) Inventor: ITALIANE, John, R., Seattle, WA 98144 (US); STYNER, James, M., Kirkland, WA 98033 (US); NGUYEN, Andrew, C., Kirkland, WA 98033 (US); GREGG, Gary, S., Marysville, Washington 98271 (US); HOLLAND, Gary, F., Snohomish, WA (US); WILSON, Michael, A., Kirkland, WA 98033 (US)
(74) Representative: Klunker . Schmitt-Nilson . Hirsch
(86) International application number: PCT/US2000/030726
(87) International publication number: WO 2001/034516

(56) References cited:
- EP-A1- 0 689 970
- WO-A-99/12776
- DE-A1- 4 116 880
- US-A- 4 998 751
- US-A- 4 998 751
- US-A- 5 219 178
- US-A- 5 219 178
- US-A- 5 564 743
- US-A- 5 697 636
- US-A- 5 709 406
- US-A- 5 934 705

## Description

### CROSS-REFERENCE TO RELATED APPLICATION

This patent application claims priority of U.S. Provisional Patent Application Serial No. 60/165,269 entitled "Gas Generation System" filed on November 12, 1999.

### BACKGROUND OF THE INVENTION

### (1) Field of the Invention

This invention relates to gas generation, and more particularly to gas generation systems useful for inflation purposes.

### (2) Description of the Related Art

Rapid deflagrating cord (RDC), sometimes erroneously identified as rapid detonating cord has been in common use in the explosives industry as a transfer line for igniting explosives. Detonating cord (detcord) has been used extensively as a transfer line and as an explosive (e.g., for cutting structural elements). Both RDC and detcord comprise a sheath containing an explosive (commonly identified as a "pyrotechnic" in the case of RDC). Detcord typically comprises a plastic or cloth sleeve containing a high explosive charge. When ignited at one end, detcord bums via propagation of a detonating shock wave. The shock wave moves through the explosive at a velocity greater than the speed of sound in the explosive (nearly always in excess of about 2000 m/s and typically 5000-7000 m/s) and ignites the unreacted explosive through which it passes. With RDC, burning is via deflagration, a high velocity subsonic propagation (typically less than 2000 m/s). With RDC, thermal energy is transferred from the reacted explosive to the unreacted explosive primarily via conduction. With detcord and RDC, the combustion involves self-contained oxygen in the explosive charge.

RDC has been used as a component in gas generators. RDC can typically be ignited via the output of a conventional automotive airbag initiator (e.g., one containing a charge of 35 mg zirconium potassium perchlorate (ZPP) or its equivalent). The output of such an initiator is not reliably capable of directly igniting detcord. Detcord requires a detonator to provide the initial energy necessary to induce ignition of the detcord.

United States Patent 6,062,143 of Grace et al. identifies a distributed charge inflator (DCI). The application identifies use of an electronic squib (commonly used in automotive airbag inflators) to ignite a core of ignition material such as RDC or mild detonating fuse (MDF). The presence of a gas-generating layer or coating on the core is also identified.

United States Patent 5,967,550 of Shirk et al. identifies a staged pyrotechnic air bag inflator. A housing defines a chamber with an end-burning pyrotechnic charge The charge has a first predetermined burn rate at a first location along the length of the chamber and a different second predetermined burn rate at a second location along the length of the chamber spaced apart from the first location. The second burn rate may be effective to maintain inflation of the air bag over a desired interval.

US 5 219 178 A shows an air bag inflation gas generator comprising combustion chambers accommodating gas generating agents formed with separating members at both ends of an elongate cylinder having gas outlets in the middle thereof, a cylindrical final filter installed inside the middle of the cylinder, intermediary filters installed between the final filter and the separating members in the cylinder, and orifices, facing toward the intermediary filters, opened at the separating members. The gas generator may generate a large volume of combustion gas generated from gas generating agents, purify a large volume of combustion gas completely, and control the burning of gas generating agents.

WO 99/12776 A1 shows an inflatable system which uses a fast-burning propellant material distributed within the inflatable component of the system to generate the gas inflating the system. The system preferably includes a distributed fast-burning igniter material, which may be enhanced with additional gas-generating materials to increase the quantities of gas generated, an optional layer, coating, or sheath of supplemental gas-generating material, an environmentally-sealed sheath to protect the enclosed materials from contamination and to improve the burn rates and efficiencies of the propellant and ignition materials, and an electronic squib used to actuate the igniter material upon a signal from the electronic sensor.

### BRIEF SUMMARY OF THE INVENTION

We have identified a need for an gas generation system (e.g., one useful for inflation) wherein an initial gas generation is followed by a sustaining gas generation. In an inflatable member system such as an automotive airbag system, the initial gas generation is effective to inflate/deploy the airbag while the sustaining gas generation is effective to maintain the airbag in a deployed condition over a time interval advantageous for providing occupant protection.

Accordingly, in one aspect the invention is directed to an inflatable member system with a gas generant initially located within the inflatable member. A gas generator housing has an initiator mounted at an upstream end and a sustainer gas generant initially positioned within the housing. The initiator is positioned to, upon triggering, cause ignition of the gas generant so that the generant combusts over a first time interval so as to generate inflation gas in a sufficient amount to substantially inflate the inflatable member from stowed to deployed conditions. The initiator is also positioned to, upon triggering, cause ignition of the sustainer gas generant so that the sustainer gas generant combusts over a second time interval. The second time interval ends after the end of the first time interval so as to generate sustainer gas in a sufficient amount to substantially maintain the inflatable member in the deployed condition.

In various implementations of the invention, the first interval may have a length of less than 0.030 seconds and the second interval may have a length of at least 0.150 seconds. The system may include a flexible container within the inflatable member with the gas generant initially located within the flexible container. There may be a conduit at least partially within the flexible container and having a sidewall extending from a proximal end proximate the initiator to a distal end. The conduit may separate a conduit interior from a conduit exterior and the sidewall may have a plurality of apertures. The gas generant may be located substantially external to the conduit. The initiator may be positioned to, upon triggering, cause a flame from to migrate from the proximal end toward the distal end. The apertures may be positioned and

have sufficient size to permit the flame front to communicate through each aperture from the conduit interior to the conduit exterior so as to ignite a portion of the gas generant proximate such aperture and cause a distributed ignition of the gas generant to generate the gas. Advantageously, instead of the conduit, the system may include an ignition cord extending from a proximal end coupled to the housing downstream end and containing a charge. The initiator maybe positioned to, upon triggering, cause ignition of the ignition cord which in turn causes combustion of the gas generant which in turn causes the inflatable member to inflate.

The gas generant may include comparatively large particles of a coolant compound intermixed with a finely divided powdered fuel/oxidizer solid propellant composite in order to effect lower bulk average gas temperatures. The coolant may effective absorb heat by a process selected by the group consisting of endothermic phase transition and decomposition. The coolant may be selected from the group consisting of magnesium carbonate, magnesite, aluminum hydroxide, magnesium hydroxide, hydroxides of lanthanide elements, boric acid, carbonates of the alkali metal elements and carbonates of the alkaline earth elements. The mass of the coolant may advantageously be from 5% to 200%, of the mass of the propellant composite. The gas generant may contain, by weight, about 50% of granular magnesium carbonate and 50% of the propellant composite. The propellant composite may burn rapidly at ambient pressure conditions.

In another aspect, the invention is directed to an inflatable member system having a flexible container within the inflatable member, a gas generant initially within the flexible container, and an initiator. An elongate ignition propagating member extends at least partially within the flexible container from a proximal end to a distal end. The gas generant is located external to the propagating member. The initiator is positioned to, upon triggering, cause a flame front to migrate from the proximal end toward the distal end. The inflation gas generated by combustion of the gas generant is a sufficient amount to substantially inflate the inflatable member from stowed to deployed conditions.

In various implementations of the invention, the propagating member may comprise a conduit having a sidewall extending from the proximal end proximate the initiator to the distal end and separating a conduit interior from a conduit exterior. The sidewall may have a plurality of apertures. The apertures may be positioned to and have sufficient size to permit the flame front to communicate through each aperture from the conduit interior to the conduit exterior so as to ignite a portion of the gas generant proximate such aperture and cause a distributed ignition of said gas generant to generate inflation gas. The conduit may be elastically or inelastically flexible or may be otherwise formable into a desired shape. The flexible container may comprise at least one layer of polymer film. The gas generant has a burn rate effective to combust during a first time interval upon ignition. The migration of the flame front may define a downstream direction and a sustainer generant may initially be positioned within the conduit or upstream thereof. The sustainer gas generant may have a burn rate effective to combust during a second time interval upon ignition. The second time interval may be longer than the first time interval and extend beyond the first time interval so that combustion of the sustainer gas generant maintains the inflatable member in the deployed condition after the end of the first interval. The system may include a housing having upstream and downstream ends and an interior space. The initiator may be mounted in the upstream housing end and the conduit proximal end may be mounted in the downstream housing end. The sustainer gas generant may initially be positioned within the housing. The sustainer gas generant may initially be positioned on a lateral interior surface of the housing surrounding a space between the initiator and the conduit. The sustainer gas generant may be located in a distal portion of the conduit. The ignition propagating member may comprise an ignition cord having a charge within a sheath. The sustainer gas generant may initially be positioned within a distal end portion of the flexible container or upstream thereof.

In other aspects, the invention is directed to method for deploying an inflatable member. In yet other aspects, the invention is directed to a gas generator not necessarily used for inflation.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a schematic cross-sectional view of an inflatable member system including a gas generator.
FIG. 2 is a partial semi-schematic cross-sectional view of the gas generator of FIG. 1.
FIG. 3 is a partial semi-schematic cross-sectional view of an alternate gas generator.
FIG. 4 is a partial semi-schematic cross-sectional view of an alternate gas generator.
F1G. 5 is a partial semi-schematic cross-sectional view of a flash tube useful in the gals generator of FIG. 4.
FIG. 6 is a partial semi-schematic view of a flash tube useful in the gas generator of FIG. 4.
FIG. 7 is a partial semi-schematic cross-sectional view of a flash tube useful in the gas generator of FIG. 4.

Like reference numbers and designations in the various drawings indicate like elements.

### DETAILED DESCRIPTION

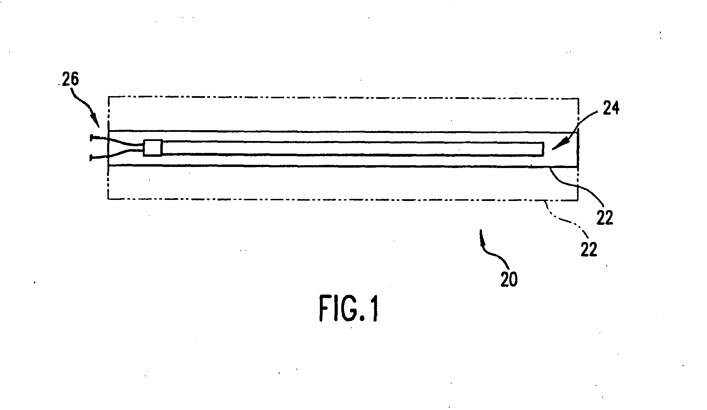

FIG. 1 shows a system 20 including an inflatable member 22 and a gas generator 24 for generating the gas necessary to inflate the inflatable member. The inflatable member is inflatable from a relatively compact, low internal volume, stowed condition shown in solid lines to a relatively high internal volume deployed condition shown in broken lines. The inflatable member may take any appropriate form such as an expandable metal bladder, an elastic bladder, or a flexible member such as a fabric bag, which, in its stowed condition, may be folded. In the exemplary embodiment, the gas generator is located internal to the inflatable member and is controlled by a pair of leads 26 extending from without to within the inflatable member and connected to an appropriate control system.

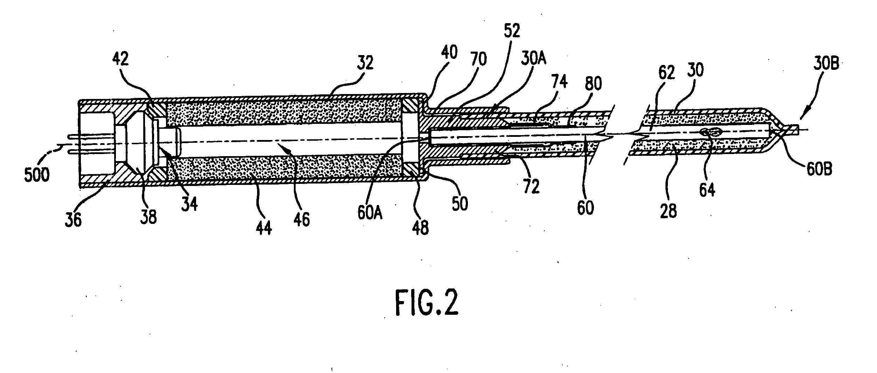

In the exemplary embodiment of FIG. 2, which is not part of the claimed invention the generator includes a primary gas generating propellant 28 contained within an elongate flexible member 30 such as a polymeric or metallic tube. The tube 30 has an upstream or proximal end 30A coupled to a downstream end of an initiator housing body 32 and extends to a closed downstream or distal end 30B. An exemplary tube is formed of a plastic such as crosslinked polyethylene, its downstream end closed via a pinch and heat seal operation. The generator has a centerline 500 along which the downstream direction is defined from the housing body 32 toward the tube distal end 30B. At its upstream end, the housing body 32 carries an initiator 34 by means of an initiator housing end plug 36. In the exemplary embodiment of a disposable gas generator 24, the body 32 and end plug 36 are formed of stainless steel. A flange portion 38 of the initiator 34 is crimped within a downstream compartment in the end plug. An exterior cylindrical surface of the end plug is received by and contacts an interior cylindrical surface of the body 32. The end plug may be secured to the body such as by welding along aligned upstream rims of the two. Stainless steel for the housing is preferred due to its strength and corrosion resistance. Stainless steel is preferred for the plug due to corrosion resistance and weld compatibility with the housing. Alternatively, an aluminum plug may be crimped or otherwise secured to the housing.

A downstream end portion (neck) of the exemplary housing body is of reduced diameter relative to the upstream portion and separated therefrom by an annular radially-extending flange forming a shoulder 40. From upstream to downstream sandwiched between a downstream surface of the end plug 36 and the shoulder 40 are: an upstream annular elastomeric foam ring 42; an annular tube 44 of sustainer propellant having a central longitudinal channel or aperture 46; a downstream annular elastomeric foam ring 48; and an upstream radially-extending flange 50 of a ferrule 52. The rings 42 and 48 serve as pads, holding and supporting the sustainer 44 under slight longitudinal compression. As an alternative to the rings, other compliant or compressible means may be used such as steel wool, belleville washers, coil springs, and the like. Exemplary sustainer generant is preferably formed by extrusion and cut to length forming upstream and downstream annular ends of the sustainer. The sustainer composition should be easy to ignite at low pressure (14.7 to 100 psia (0.10 to 0.69 MPa)) and exhibit a relatively low pressure exponent <0.7). Examples of suitable propellants include an ammonium perchlorate/potassium nitrate type composition (AP/KN) formulations and air bag propellant formulations that have been modified with as suitable burn rate catalyst. Certain potentially useful propellants including a powder fuel, a powder oxidizer, and a powder coolant such as disclosed in the United States Patent 5,609,210 of Galbraith et al.,

Such propellant/generant may also be useful as the primary gas generating propellant. Other potentially useful propellants are disclosed in United States Patent 6,123,790 of Lundstrom et al., the disclosure of which is incorporated by reference herein as if set forth at length. Another alternative combination involves a loose nitrocellulose as the primary gas generating propellant with a compacted cellulose/nitrocellulose composite as the sustainer. A preferred sustainer should exhibit relatively long burn times (e.g., 0.15 or 0.25 to 5 seconds) at pressure ranging from 14.7 psia to 200 psia (0.10 MPa to 1.4 MPa).

In the illustrated embodiment, an operative end or charge cup portion of the initiator extends slightly within an upstream end portion of the sustainer. An exemplary initiator may take the form of a squib having a general construction commonly utilized in automotive airbag applications. Within a plastic body, the squib contains a small explosive charge (not shown) and has electrical leads for connecting the charge to an external control circuit via the leads 26. When an appropriate voltage is applied to the leads, the charge is ignited. Examples of such initiators are the LCI initiator of Quantic Industries, Inc. of San Carlos, California and products of Special Devices, Inc. of Newhall, California. If required, a more robust initiator having a threaded metal body (e.g., manufactured according to United States Military Standard I-23659) may be used.

Concentrically within the tube is carried an ignition propagating member 60 extending from an upstream end 60A to a downstream end 60B. An exemplary propagating member is rapid deflagrating cord having a sheath 62 and a pyrotechnic or an explosive 64 contained within the sheath. In the exemplary embodiment, the cord upstream/proximal end 60A is located near but slightly downstream of the downstream end of the sustainer. The cord is thus spaced significantly apart from the initiator charge cup. Advantageously, the initiator charge is effective to initiate combustion of the propagating member and of the sustainer. This may require the presence of a relatively large initiator charge or the addition of a transfer charge to transfer output of the initiator to the propagating member. This need can be reduced somewhat by extending the propagating member through the sustainer into close proximity with the initiator. However such a configuration may cause damage to the sustainer from the combustion of the propagating member.

The upstream cord end 60A is received by and held within a counterbored central aperture in the ferrule 52. A first portion 70 of the ferrule extends forward from the flange 50 largely within the downstream neck portion of the housing. The diameter of the portion 70 advantageously provides a slight clearance between its outer surface and the inner surface of the housing neck. A more downstream second ferrule portion 72 has a further reduced diameter. The portion 72 is surrounded by an upstream end portion of the tube. The tube wall thickness is advantageously greater than the difference between the external radii of the portions 70 and 72, permitting the tube to be compressed between the inner surface of the neck and the outer surface of the portion 72. A third ferrule portion 74 further downstream and of substantially reduced diameter is separated from the portion 72 by a bevel approximately coaligned with the downstream rim of the housing. The bevel allows the housing to be crimped radially inward at the rim, providing robust engagement between the housing and the tube. The portion 74 extends to a downstream rim of the ferrule and is surrounded by a length of heat shrink tubing 80 extending forward therefrom and surrounding an adjacent portion of the propagating member. The tubing 80 provides a seal between the annular propellant-carrying space between the tube and propagating member on the one hand and the interior of the housing on the other. Since, in the illustrated embodiment, the ferrule is totally sealed within the housing and tube, environmental exposure is less of a concern. Accordingly, it may be formed of a carbon steel instead of stainless steel or another more corrosion resistant metal.

Advantageously, the tube 30 and propagating member/cord 60 are highly flexible, permitting them to conform to a desired shape within the interior of the inflatable member in the stowed condition. Depending upon the application, their lengths may be from a few centimeters to several meters. In automotive airbag inflation applications, lengths from approximately 10 cm to approximately 2 m are anticipated. The diameter of the tube will typically be an extremely small fraction of its length (e.g., about 0.9 cm, with approximately 0.5-2.0 cm likely to cover most applications).

Upon triggering of the initiator, the explosion of the initiator's charge ignites the upstream cord end 60A. This in turn, causes a deflagration of the explosive 64 propagating from the upstream end 60A to the downstream end 60B. The deflagrating explosive 64 may combust the sheath 62 or may be vented through apertures (not shown) in the sheath. As the deflagrating front moves along the cord 60 within the tube 30, it induces local ignition of the primary generant 28 located in the annular space between the outer surface of the sheath 62 and the inner surface of the tube 30. Combustion of the primary generant 28 generates a high volume of gas which ruptures the tube 30 and inflates the inflatable member 22 from stowed to deployed conditions. The primary generant 28 will typically combust over a relatively short time interval. To maintain inflation of the inflatable member, the sustainer is provided to combust over a relatively longer interval. The gas generated from combustion of the sustainer may be vented from the housing through the ferrule or through initially sealed apertures (not shown).

The length of the time intervals over which the primary generant and the sustainer generant are combusted may be selected for the particular application. The beginning of the latter interval may also be delayed relative to the beginning of the former. Additionally, the total amount of gas generated by respective combustion of the primary and sustainer generants may be tailored to the particular application. By way of example, in an automotive passenger restraint application: the first (inflation) interval may have a length of about 8-20 ms: the second (sustaining) interval may have a length of about 0.25-7.0 seconds and its beginning may not necessarily be offset from the beginning of the first interval; and the molar amount of gas produced by combustion of the sustainer generant may be approximately one to ten times that produced by combustion of the primary generant (with a negligible to small contribution from the combustion of the cord 50). The selection of the absolute and relative amounts of gas to be generated by the primary and sustainer generants as well as the required intervals are expected to be optimized for any particular use, based upon the myriad of factors presented by the particular use and by the particular construction of inflatable member.

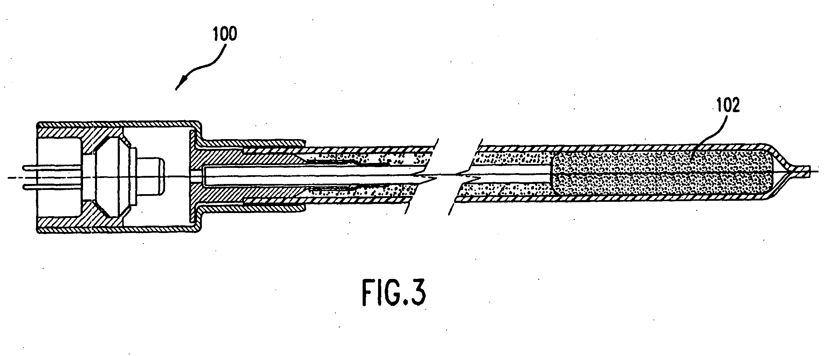

FIG. 3 which is not part of the claimed invention shows an alternate embodiment 100 of a gas generator in large part similar or identical to the generator 24 of FIG. 2. A key difference is that the illustrated generator 100 omits the sustainer within the housing, as well as the associated volume of housing, and the sustainer support rings. Also, the initiator may be of reduced charge as the initiator charge cup may be in relative close facing proximity to the upstream propagation member end. A further difference is the location of a sustainer 102 in a distal (downstream) portion of the tube. In the illustrated embodiment, the sustainer 102 is formed approximately as a cylinder (e.g., pressed, molded, or extruded) having an upstream end proximate a downstream end of the propagation member and a downstream end proximate the downstream end of the tube. In the generator 100, the sustainer 102 may be ignited by the propagating member and/or the main propellant, rather than directly by the initiator. Advantageously, the tube is provided with sufficient robustness so that its rupturing via the combustion of the propagating member and main propellant does not sever a distal portion of the tube from a proximal portion which remains attached to the housing. Advantageously, longitudinally-extending ruptures permit venting of the combustion gasses while retaining the sustainer sufficiently to allow the sustainer to be ignited and combust over the sustaining interval. The tube may also be provided with preferential rupture zones such as reduced-thickness relieved areas.

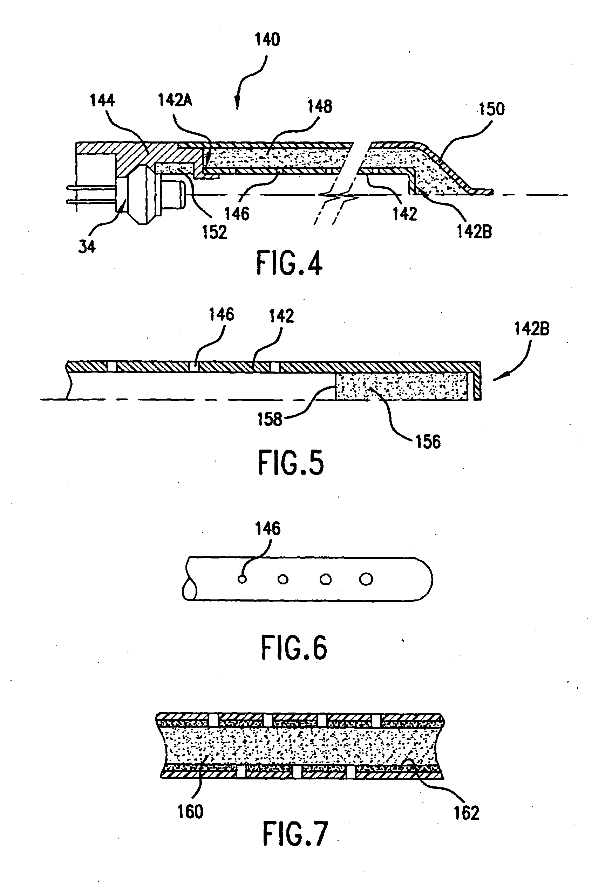

FIG. 4 shows a gas generator 140 featuring a flash tube 142 as a propagating member. The flash tube 142 has an open proximal end 142A connected to the initiator housing 144 and a closed distal end 142B. A plurality of apertures 146 are located along the length of the tube 142. These apertures may be initially sealed, such as by a film layer, or may initially extend only partially through the thickness of the tube 142. In operation, the flame output of the initiator may proceed down the tube 142, passing through the apertures 146 (and rupturing any film or other blockage of the apertures). The primary generant 148 is thereby ignited, rupturing the container 150, and inflating the inflatable member (not shown). When compared with direct ignition of the primary generant by a squib, use of a flash tube helps to improve simultaneity of ignition throughout the generant and protects the inflatable member from direct contact with the explosive output of the initiator.

A sustainer generant 152 may be located within the housing 144. Alternatively, or in addition, a sustainer generant may be located within the tube, namely at the distal end 142B. FIG. 5 shows such a sustainer generant 156. The sustainer generant 156 presents a relatively small upstream surface 158 to the initial flame within the flash tube. Such flame ignites the generant 156 which then combusts from upstream to downstream over the desired sustaining interval.

The size and spacing of the apertures 146 may be varied along the length of the flash tube 142 to achieve a desired inflation profile. For example, as shown in FIG. 6 the apertures may be made progressively larger from the proximal end to the distal end of the flash tube. This may be advantageous for reasons which may include controlling shock imparted to the surrounding inflatable member.

If the output of the initiator 34 is insufficient to ignite the primary generant (this will very likely be the case with a relatively long flash tube) the initiator output may be augmented by locating a small amount of explosive material within the initiator housing or within the flash tube. For example, as shown in FIG. 7, supplemental material 160 may loosely fill the tube and/or supplemental material 162 may be provided as a coating on the inner surface of the tube. An exemplary supplemental material is boron potassium nitrate (BKNO₃).

In certain applications, a rebuildable/reusable gas generator may be more desirable than a disposable one. One such possible embodiment (not shown) sandwiches the initiator flange between upstream and downstream pieces of the end plug. The upstream plug piece may have an externally threaded outer surface engaged to an internally threaded mouth surface of the housing body.

Other sustainer configurations are possible. For example, the sustainer may be formed a as a coating on the interior surface of the housing. As an alternative to a single extruded-to-length sustainer piece or "grain", the sustainer may be formed of multiple pieces. For example, the sustainer may be formed as a stack of compressed, molded, or extruded, centrally apertured, sustainer disks. The number of disks, and thus the length of the stack, would be selected as appropriate for the intended application.

In other alternate embodiments of a gas generator (not shown) the propagating member may be formed by a length of detcord, the upstream end of which is held by the initiator housing. The output of the initiator may not be capable of directly igniting the explosive charge (e.g., PETN or a PETN/RDX mixture) of the detcord. In this case intervening high explosive transfer charge may be provided. The transfer charge is ignited by the output of the initiator and in turn is effective to ignite the detcord. The use of detcord may present cost advantages relative to use of RDC or other material. The speed of explosive propagation of detcord may provide a high degree of simultaneity of ignition in a body of generant dispersed along the detcord.

One or more embodiments of the present invention have been described. Nevertheless, it will be understood that various modifications may be made without departing from the scope of the invention. For example, various forms and compositions of primary and sustainer generants may be utilized. Pellets and disks of compacted, molded, or extruded generants are desirable for the sustainer generant as are single grain forms due to the reduced combustion rate. Additionally, many of the details of the generator may be optimized for the particular inflation or other application with which it is intended to be used. Accordingly, other embodiments are within the scope of the following claims.

## Claims

1. A gas generating system (140), comprising:
a flexible container (150);
a gas generant (148), initially located within the flexible container; and an initiator (34);
a flexible conduit (142), which is at least partially within the flexible container, the flexible conduit having a sidewall extending from a proximal end (142A) proximate the initiator to a distal end (142B) and separating a conduit interior from a conduit exterior, wherein
the sidewall has a plurality of apertures (146) and the gas generant is located substantially external to the flexible conduit;
the initiator is positioned to, upon triggering, cause a flame front to migrate from the proximal end toward the distal end; and
the plurality of apertures are positioned and having sufficient size to permit the flame front to communicate through each aperture from the conduit interior to the conduit exterior so as to ignite a portion of the gas generant proximate such aperture and cause a distributed ignition of said gas generant to generate gas.

2. The inflatable member system (20), comprising:
an inflatable member (22) expandable from a stowed condition to a deployed condition;
a gas generating system (140) according to claim 1, initially located within the inflatable member.
a housing (144) having upstream and downstream ends and an interior space and wherein the initiator is mounted in the upstream housing end; and
a sustainer gas generant (152) initially positioned within the housing;
wherein:
the initiator is positioned to, upon triggering, cause ignition of the gas generant so that the gas generant combusts over a first time interval so as to generate inflation gas in a sufficient amount to substantially inflate the inflatable member from the stowed condition the deployed condition; and
the initiator is positioned to, upon triggering, cause ignition of the sustainer gas generant so that the sustainer gas generant combusts over a second time interval, ending after an end of the first time interval, so as to generate sustainer gas in a sufficient amount to substantially maintain the inflatable member in the deployed condition.

3. The inflatable member system of claim 2wherein:
the first interval has a length of less than 0.030 seconds; and
the second interval has a length of at least 0.150 seconds.

4. The inflatable member system of claim 2 wherein said gas generant includes comparatively large particles of a coolant compound intermixed with a finely divided powdered fuel/oxidizer solid propellant composite in order to effect lower bulk average gas temperatures.

5. The inflatable member system of claim 4 wherein said coolant effectively absorbs heat by a process selected from the group consisting of endothermic phase transition and decomposition.

6. The inflatable member system of claim 5 wherein said coolant is selected from the group consisting of magnesium carbonate, magnesite, aluminum hydroxide, magnesium hydroxide, hydroxides of lanthanide elements, boric acid, carbonates of the alkali metal elements and carbonates of the alkaline earth elements.

7. The inflatable member system of claim 2 wherein:
the ignition propagating member (142) comprises a conduit having a sidewall extending from the proximal end proximate the initiator to the distal end and separating a conduit interior from a conduit exterior, the sidewall having a plurality of apertures (146); and
the plurality of apertures are positioned and have sufficient size to permit the flame front to communicate through each aperture from the conduit interior to the conduit exterior so as to ignite a portion of the gas generant proximate such aperture and cause a distributed ignition of said gas generant to generate inflation gas.

8. The inflatable member system of claim 7 wherein said flexible container comprises at least one layer of polymer film.

9. The inflatable member system of claim 7 wherein:
said gas generant has a burn rate effective to combust during a first time interval upon ignition;
the migration of the flame front defines a downstream direction;
a sustainer gas generant (152; 156) is initially positioned within the conduit or upstream thereof, the sustainer gas generant having a burn rate effective to combust during a second time interval upon ignition, the second time interval being longer than the first time interval and extending beyond the first time interval so that combustion of the sustainer gas generant maintains the inflatable member in the deployed condition after the end of the first interval.

10. The inflatable member system of claim 9 further comprising a housing (144) having upstream and downstream ends and an interior space and wherein the initiator (34) is mounted in the upstream housing end and the conduit proximal end is mounted in the downstream housing end and wherein the sustainer gas generant (152) is initially positioned on a lateral interior surface of the housing (144) surrounding a space between the initiator and the conduit.

11. The inflatable member system of claim 10 wherein the sustainer gas generant (156) is located in a distal end portion of the conduit.

12. A method for deploying an inflatable member (22) from a stowed condition to a deployed condition, comprising:
providing a gas generant (148), initially located within a flexible container within the inflatable member; and
providing an initiator (34);
providing a flexible conduit (142) at least partially within the flexible container, the flexible conduit having a sidewall extending from a proximal end proximate the initiator to a distal end and separating a conduit interior from a conduit exterior, the sidewall having a plurality of apertures (146) and the gas generant substantially external to the flexible conduit;
triggering the initiator to cause a flame front to migrate from the proximal end toward the distal end;
permitting the flame front to communicate through each aperture from the conduit interior to the conduit exterior so as to ignite a portion of the gas generant proximate such aperture and cause a distributed ignition of said gas generant to generate gas;
permitting the generated gas to substantially inflate the inflatable member from the stowed condition the deployed condition.

13. The method of claim 12 wherein the gas generant substantially combusts over a first time interval and the method further comprises:
providing a sustainer gas generant (152; 156), initially positioned within the conduit or upstream thereof, the sustainer gas generant having a burn rate effective to combust during a second time interval upon ignition, the second time interval being longer than the first time interval and extending beyond the first time interval so that combustion of the sustainer gas generant maintains the inflatable member in the deployed condition after the end of the first interval.

## Patentansprüche

1. Gaserzeugendes System (140), aufweisend:
einen flexiblen Behälter (150);
ein Gaserzeugungsmittel (148), das sich anfangs im Inneren des flexiblen Behälters befindet; und
einen Initiator (34);
einen flexiblen Kanal (142), der sich zumindest teilweise innerhalb des flexiblen Behälters befindet, wobei der flexible Kanal eine Seitenwand aufweist, die sich von einem proximalen Ende (142A) in der Nähe des Inititators zu einem distalen Ende (142B) erstreckt und ein Kanalinneres von einem Kanaläußeren trennt, wobei
die Seitenwand eine Mehrzahl von Öffnungen (146) aufweist und das Gaserzeugungsmittel im Wesentlichen außerhalb von dem flexiblen Kanal angeordnet ist;
wobei der Initiator derart angeordnet ist, dass er bei Auslösung eine Flammenfront dazu veranlasst, von dem proximalen Ende in Richtung zu dem distalen Ende zu wandern; und
wobei die Mehrzahl der Öffnungen derart positioniert ist und eine ausreichende Größe aufweist, damit die Flammenfront durch jede Öffnung hindurch aus dem Kanalinneren mit dem Kanaläußeren kommunizieren kann,
um **dadurch** einen Teil des Gaserzeugungsmittels in der Nähe einer derartigen Öffnung zu zünden und eine verteilte Zündung des Gaserzeugungsmittels zum Erzeugen von Gas zu veranlassen.

2. System (20) mit aufblasbarem Element, aufweisend:
ein aufblasbares Element (22), das von einem verstauten Zustand in einen entfalteten Zustand expandierbar ist;
ein gaserzeugendes System (140) nach Anspruch 1, das sich anfangs im Inneren des aufblasbaren Elements befindet;
ein Gehäuse (144) mit einem strömungsaufwärtigen und einem strömungsabwärtigen Ende und einem Innenraum, wobei der Initiator in dem strömungsaufwärtigen Gehäuseende angebracht ist; und
ein Erzeugungsmittel (152) für nachhaltiges Gas, das anfangs im Inneren des Gehäuses angeordnet ist;
wobei der Initiator derart angeordnet ist, dass er bei Auslösung ein Zünden des Gaserzeugungsmittels veranlasst, so dass das Gaserzeugungsmittel über ein erstes Zeitintervall verbrennt, um **dadurch** Aufblasgas in einer ausreichenden Menge zu erzeugen, um das aufblasbare Element aus dem verstauten Zustand im Wesentlichen in den entfalteten Zustand aufzublasen; und
wobei der Initiator derart angeordnet ist, dass er bei Auslösung ein Zünden des Erzeugungsmittels für nachhaltiges Gas veranlasst, so dass das Erzeugungsmittel für nachhaltiges Gas über ein zweites Zeitintervall verbrennt, das nach dem Ende des ersten Zeitintervalls endet, um **dadurch** ein nachhaltiges Gas in einer ausreichenden Menge zu erzeugen, um das aufblasbare Element im Wesentlichen im entfalteten Zustand zu halten.

3. System mit aufblasbarem Element nach Anspruch 2,
wobei das erste Intervall eine Länge von weniger als 0,030 Sekunden aufweist; und
wobei das zweite Intervall eine Länge von mindestens 0,150 Sekunden aufweist.

4. System mit aufblasbarem Element nach Anspruch 2,
wobei das Gaserzeugungsmittel vergleichsweise große Partikel einer Kühlmittelverbindung gemischt mit einer fein verteilten Pulverbrennstoff-/Oxidationsmittel-Festtreibmittel-Zusammensetzung aufweist, um niedrigere volumenmittlere Gastemperaturen zu bewirken.

5. System mit aufblasbarem Element nach Anspruch 4,
wobei das Kühlmittel in effektiver Weise Wärme absorbiert durch einen Prozess, der ausgewählt ist aus der Gruppe, die aus endothermem Phasenübergang und Abbau besteht.

6. System mit aufblasbarem Element nach Anspruch 5,
wobei das Kühlmittel aus der Gruppe ausgewählt ist, die aus Magnesiumcarbonat, Magnesit, Aluminiumhydroxid, Magnesiumhydroxid, Hydroxiden von Lanthanidelementen, Borsäure, Carbonaten der Alkalimetallelemente und Carbonaten der Erdalkalielemente besteht.

7. System mit aufblasbarem Element nach Anspruch 2,
wobei das die Zündung ausbreitende Element (142) einen Kanal mit einer Seitenwand aufweist, die sich von dem proximalen Ende in der Nähe des Intiators zu dem distalen Ende erstreckt und ein Kanalinneres von einem Kanaläußeren trennt, wobei die Seitenwand eine Mehrzahl von Öffnungen (146) aufweist; und
wobei die Mehrzahl der Öffnungen derart positioniert ist und eine ausreichende Größe aufweist, damit die Flammenfront durch jede Öffnung hindurch aus dem Kanalinneren mit dem Kanaläußeren kommunizieren kann, um **dadurch** einen Teil des Gaserzeugungsmittels in der Nähe einer derartigen Öffnung zu zünden und eine verteilte Zündung des Gaserzeugungsmittels zum Erzeugen von Gas zu veranlassen.

8. System mit aufblasbarem Element nach Anspruch 7,
wobei der flexible Behälter mindestens eine Lage einer Polymerfolie aufweist.

9. System mit aufblasbarem Element nach Anspruch 7,
wobei das Gaserzeugungsmittel eine Brennrate aufweist, die eine Verbrennung während eines ersten Zeitintervalls ab Zündung bewirkt;
wobei das Wandern der Flammenfront eine strömungsabwärtige Richtung definiert;
wobei ein Erzeugungsmittel (152; 156) für nachhaltiges Gas anfangs im Inneren des Kanals oder strömungsaufwärts davon angeordnet ist, wobei das Erzeugungsmittel für nachhaltiges Gas eine Brennrate aufweist, die eine Verbrennung während eines zweiten Zeitintervalls ab Zündung bewirkt, wobei das zweite Zeitintervall länger ist als das erste Zeitintervall und über das erste Zeitintervall hinaus geht, so dass die Verbrennung des Erzeugungsmittels für nachhaltiges Gas das aufblasbare Element nach dem Ende des ersten Zeitintervalls in dem entfalteten Zustand hält.

10. System mit aufblasbarem Element nach Anspruch 9,
weiterhin aufweisend ein Gehäuse (144) mit einem strömungsaufwärtigen und einem strömungsabwärtigen Ende und einem Innenraum, wobei der Initiator (34) in dem strömungsaufwärtigen Gehäuseende angebracht ist und das proximale Ende des Kanals in dem strömungsabwärtigen Gehäuseende angebracht ist und wobei das Erzeugungsmittel (152) für nachhaltiges Gas anfangs an einer seitlichen Innenfläche des Gehäuses (144) angeordnet ist, die einen Raum zwischen dem Initiator und dem Kanal umgibt.

11. System mit aufblasbarem Element nach Anspruch 10,
wobei das Erzeugungsmittel (156) für nachhaltiges Gas in einem distalen Endbereich des Kanals angeordnet ist.

12. Verfahren zum Entfalten eines aufblasbaren Elements (22) aus einem verstauten Zustand in einen entfalteten Zustand,
wobei das Verfahren folgende Schritte aufweist:
Bereitstellen eines Gaserzeugungsmittels (148), das sich anfangs im Inneren eines flexiblen Behälters innerhalb des aufblasbaren Elements befindet; und
Bereitstellen eines Initiators (34);
Bereitstellen eines flexiblen Kanals (142) mindestens teilweise innerhalb des flexiblen Behälters, wobei der flexible Kanal eine Seitenwand aufweist, die sich von einem proximalen Ende nahe dem Initiator zu einem distalen Ende erstreckt und ein Kanalinneres von einem Kanaläußeren trennt, wobei die Seitenwand eine Mehrzahl von Öffnungen (146) aufweist und das Gaserzeugungsmittel im Wesentlichen außerhalb von dem flexiblen Kanal angeordnet ist;
Auslösen des Initiators, um eine Flammenfront zu veranlassen, von dem proximalen Ende in Richtung zu dem distalen Ende zu wandern;
Ermöglichen der Flammenfront, durch jede Öffnung hindurch von dem Kanalinneren mit dem Kanaläußeren zu kommunizieren, um einen Teil des Gaserzeugungsmittels in der Nähe einer derartigen Öffnung zu zünden und eine verteilte Zündung des Gaserzeugungsmittels zum Erzeugen von Gas zu veranlassen;
Ermöglichen, dass das erzeugte Gas das aufblasbare Element aus dem verstauten Zustand im Wesentlichen in den entfalteten Zustand aufbläst.

13. Verfahren nach Anspruch 12,
wobei das Gaserzeugungsmittel im Wesentlichen über ein erstes Zeitintervall verbrennt und das Verfahren ferner folgenden Schritt aufweist:
Bereitstellen eines Erzeugungsmittels (152; 156) für nachhaltiges Gas, das anfangs im Inneren des Kanals oder strömungsaufwärts von diesem angeordnet ist, wobei das Erzeugungsmittel für nachhaltiges Gas eine Brennrate aufweist, die eine Verbrennung während eines zweiten Zeitintervalls ab Zündung bewirkt, wobei das zweite Zeitintervall länger ist als das erste Zeitintervall und über das erste Zeitintervall hinaus geht, so dass die Verbrennung des Erzeugungsmittels für nachhaltiges Gas das aufblasbare Element nach dem Ende des ersten Zeitintervalls in dem entfalteten Zustand hält.

## Revendications

1. Système générateur de gaz (140), comprenant :
un conteneur souple (150) ;
un agent générateur de gaz (148), initialement placé à l'intérieur du conteneur souple ; et
un initiateur (34) ;
une conduite souple (142), qui est au moins partiellement à l'intérieur du conteneur souple, la conduite souple comportant une paroi latérale s'étendant à partir d'une extrémité proximale (142A) à proximité de l'initiateur jusqu'à une extrémité distale (142B) et séparant un intérieur de conduite d'un extérieur de conduite, dans lequel
la paroi latérale comportant plusieurs ouvertures (146) et l'agent générateur de gaz est placé sensiblement à l'extérieur de la conduite souple ;
l'initiateur est positionné de manière à, lors d'un déclenchement, faire migrer un front de flamme depuis l'extrémité proximale vers l'extrémité distale ; et
les ouvertures sont positionnées et présentent une taille suffisante pour permettre au front de flamme de communiquer à travers chaque ouverture de l'intérieur de la conduite vers l'extérieur de la conduite de manière à allumer une partie de l'agent générateur de gaz à proximité de cette ouverture et à entraîner un allumage distribué dudit agent générateur de gaz pour générer du gaz.

2. Système d'élément gonflable (20), comprenant :
un élément gonflable (22) pouvant se détendre d'un état plié vers un état déployé ;
un système générateur de gaz (140) selon la revendication 1, initialement placé à l'intérieur de l'élément gonflable,
un boîtier (144) comportant des extrémités amont et aval et un espace intérieur, et dans lequel l'initiateur est monté dans l'extrémité de boîtier amont ; et
un agent générateur de gaz d'entretien (152) initialement placé à l'intérieur du boîtier ;
dans lequel :
l'initiateur est positionné de manière à, lors d'un déclenchement, entraîner un allumage de l'agent générateur de gaz de telle sorte que l'agent générateur de gaz brûle sur un premier intervalle de temps de manière à générer un gaz de gonflage dans une quantité suffisante pour gonfler sensiblement l'élément gonflable de l'état plié vers l'état déployé ; et
l'initiateur est positionné de manière à, lors d'un déclenchement, entraîner un allumage de l'agent générateur de gaz d'entretien de telle sorte que l'agent générateur de gaz d'entretien brûle sur un second intervalle de temps, se terminant après une fin du premier intervalle de temps, de manière à générer du gaz d'entretien dans une quantité suffisante pour maintenir sensiblement l'élément gonflable dans l'état déployé.

3. Système d'élément gonflable selon la revendication 2, dans lequel :
le premier intervalle présente une longueur inférieure à 0,030 seconde ; et
le second intervalle présente une longueur d'au moins 0,150 seconde.

4. Système d'élément gonflable selon la revendication 2, dans lequel ledit agent générateur de gaz inclut des particules comparativement grandes d'un composé de refroidissement mélangé avec un composé de combustible pulvérulent/agent de propulsion solide oxydant finement divisé afin d'obtenir des températures moyennes en volume de gaz inférieures.

5. Système d'élément gonflable selon la revendication 4, dans lequel ledit composé de refroidissement absorbe efficacement la chaleur par un procédé choisi parmi le groupe constitué d'une transition de phase endothermique et d'une décomposition.

6. Système d'élément gonflable selon la revendication 5, dans lequel ledit composé de refroidissement est choisi parmi le groupe constitué de carbonate de magnésium, de magnésite, d'hydroxyde d'aluminium, d'hydroxyde de magnésium, d'hydroxydes d'éléments des lanthanides, d'acide borique, de carbonates des éléments métalliques alcalins et de carbonates des éléments alcalino-terreux.

7. Système d'élément gonflable selon la revendication 2, dans lequel :
l'élément de propagation d'allumage (142) comprend une conduite comportant une paroi latérale s'étendant à partir de l'extrémité proximale à proximité de l'initiateur jusqu'à l'extrémité distale et séparant un intérieur de conduite d'un extérieur de conduite, la paroi latérale ayant plusieurs ouvertures (146) ; et
les ouvertures sont positionnées et présentent une taille suffisante pour permettre au front de flamme de communiquer à travers chaque ouverture depuis l'intérieur de la conduite vers l'extérieur de la conduite de manière à allumer une partie de l'agent générateur de gaz à proximité de cette ouverture et entraîner un allumage distribué dudit agent générateur de gaz afin de générer un gaz de gonflage.

8. Système d'élément gonflable selon la revendication 7, dans lequel ledit conteneur souple comprend au moins une couche de film polymère.

9. Système d'élément gonflable selon la revendication 7, dans lequel :
ledit agent générateur de gaz présente une vitesse de combustion efficace pour brûler pendant un premier intervalle de temps lors d'un allumage ;
la migration du front de flamme définit une direction aval ;
un agent générateur de gaz d'entretien (152 ; 156) est initialement positionné à l'intérieur de la conduite ou en amont de celle-ci, l'agent générateur de gaz d'entretien ayant une vitesse de combustion efficace pour brûler pendant un second intervalle de temps lors d'un allumage, le second intervalle de temps étant plus long que le premier intervalle de temps et s'étendant au-delà du premier intervalle de temps de telle sorte que la combustion de l'agent générateur de gaz d'entretien maintient l'élément gonflable dans l'état déployé après la fin du premier intervalle.

10. Système d'élément gonflable selon la revendication 9, comprenant en outre un boîtier (144) comportant des extrémités amont et aval et un espace intérieur, et dans lequel l'initiateur (34) est monté dans l'extrémité de boîtier amont et l'extrémité proximale de conduite est montée dans l'extrémité de boîtier aval, et dans lequel l'agent générateur de gaz d'entretien (152) est initialement positionné sur une surface intérieure latérale du boîtier (144) entourant un espace entre l'initiateur et la conduite.

11. Système d'élément gonflable selon la revendication 10, dans lequel l'agent générateur de gaz d'entretien (156) est situé dans une partie d'extrémité distale de la conduite.

12. Procédé pour déployer un élément gonflable (22) d'un état plié à un état déployé, comprenant les étapes de :
fourniture d'un agent générateur de gaz (148), initialement situé à l'intérieur d'un conteneur souple à l'intérieur de l'élément gonflable ; et
fourniture d'un initiateur (34) ;
fourniture d'une conduite souple (142) au moins partiellement à l'intérieur du conteneur souple, la conduite souple comportant une paroi latérale s'étendant à partir d'une extrémité proximale à proximité de l'initiateur jusqu'à une extrémité distale et séparant un intérieur de conduite d'un extérieur de conduite, la paroi latérale comportant plusieurs ouvertures (146) et l'agent générateur de gaz étant sensiblement extérieur à la conduite souple ;
déclenchement de l'initiateur pour faire migrer un front de flamme depuis l'extrémité proximale vers l'extrémité distale ;
permission au front de flamme de communiquer à travers chaque ouverture de l'intérieur de la conduite jusqu'à l'extérieur de la conduite de manière à allumer une partie de l'agent générateur de gaz à proximité de cette ouverture et entraîner un allumage distribué dudit agent générateur de gaz afin de générer du gaz ;
permission au gaz généré de gonfler sensiblement l'élément gonflable de l'état plié à l'état déployé.

13. Procédé selon la revendication 12, dans lequel l'agent générateur de gaz brûle sensiblement sur un premier intervalle de temps et le procédé comprend en outre l'étape de :
fourniture d'un agent générateur de gaz d'entretien (152 ; 156), initialement positionné à l'intérieur de la conduite ou en amont de celle-ci, l'agent générateur de gaz d'entretien présentant une vitesse de combustion efficace pour brûler pendant un second intervalle de temps lors d'un allumage, le second intervalle de temps étant plus long que le premier intervalle de temps et s'étendant au-delà du premier intervalle de temps de telle sorte qu'une combustion de l'agent générateur de gaz d'entretien maintient l'élément gonflable dans l'état déployé après la fin du premier intervalle.
